# EUROPEAN PATENT SPECIFICATION

(11) **EP 1 480 423 B1**
(45) Date of publication and mention of the grant of the patent: **24.10.2007**
(21) Application number: 03011565.3
(22) Date of filing: 21.05.2003
(51) Int. Cl.: H04M 1/725, H04N 7/14, H04Q 7/32

(54) **Mobile communication device with reprogrammable integrated circuit**
Mobiles Kommunikationsgerät mit reprogrammierbarem integriertem Schaltkreis
Appareil de communication mobile avec circuit intégré reprogrammable

(43) Date of publication of application: 24.11.2004
(73) Proprietor: Sony Ericsson Mobile Communications AB, 221 88 Lund (SE)
(72) Inventor: Maletz, Thomas, Sony Ericsson Mobile Com. Int. AB, 85609 Aschheim-Dornach (DE)
(74) Representative: Körber, Martin Hans

(56) References cited:
- WO-A-03/039175
- FR-A- 2 832 233
- US-A- 6 052 600
- US-A1- 2003 008 646
- US-B1- 6 427 078

## Description

The present invention relates to a mobile communication device which comprises several input and output means for use in multimedia applications. In particular, the present invention relates to a portable telephone.

Due to the increased data transfer rates of modern wireless communication systems, portable telephones are not only used for telephone conversation but also provide a plurality of multimedia features. For example, portable telephones are known which can be used as MP3-players for listening to recorded music. The modern communication technologies like UMTS are expected to provide high rates of data transfer which would allow to transfer the music data or even movies online via the wireless communication link. The data received via the communication link are then processed by the internal circuitry of the telephone and played or displayed as audio or video information.

Further, it is known to provide portable telephones with digital cameras which allow the user of the telephone to take and transfer small digital pictures or short movies. These digital cameras are either integrated in the portable telephone or located in a separate casing which is connectable with the telephone. Portable telephones of the present generation can also often be used to browse the Internet.

In order to process the data for the multimedia applications and to drive the input and output means, driving circuits and circuitry for the data processing are necessary. In principle, two different solutions are known for this problem.

According to the first solution, a plurality of application specific integrated circuits is used which circuits run the different multimedia applications. In particular, for each input or output means one separate integrated circuit is provided in the mobile wherein the circuits are specifically designed to drive the input or output means assigned thereto.

This first solution provides an optimal performance for the different multimedia applications since the specialized circuits which are responsible for the applications can be active at the same time. However, the high number of integrated circuits needed in this solution increases the costs of the communication device. Further, the size of the communication device is increased due to the high number of electrical components to be accommodated.

According to a second alternative, the amount of electronic components contained in the communication device is reduced to a minimum. This is achieved by using a single central processing unit (CPU) which controls all multimedia applications. The information necessary to drive the different input and output means is contained in software applications which are stored in separate storing means. Depending on which multimedia application is selected by the user of the mobile communication device, the central processing unit runs the corresponding software application in order to drive the input or output means in an appropriate way.

In this second solution, the number of integrated circuits is reduced to a minimum which accordingly reduces also the costs of the mobile communication device. Further, the dimensions of the communication device can be kept to a minimum since - due to the low number of electrical components - the space required to accommodate all components is very low. However, in contrast to the first solution with a plurality of driving circuits for the different input and output means, the performance of the single central processor unit is relatively low since the running of software applications takes considerably more time than the data processing done by the specific integrated circuits.

WO 03/039175 A discloses a mobile communication device with the features of the preamble of claim 1.

It is therefore an object of the present application to provide a mobile communication device for wireless data communication which offers several multimedia features wherein the number of electronic components for driving the multimedia applications is reduced while at the same time a high performance is obtained.

According to the present invention, a mobile communication device according to claim 1 is provided which comprises communication means for establishing a wireless communication link and input and output means for recording, processing, playing and/or showing audio or video information in multimedia applications. The communication device comprises further at least one re-programmable integrated circuit as well as programming means for programming the integrated circuit in order to drive one or a plurality of the input and output means. The communication device is hereby adapted to offer a plurality of multimedia applications that can be selected by a user, wherein the programming means are adapted to program the integrated circuit in order to run a selected application.

Similar to the second alternative described above with a central processing unit for running all multimedia applications, the mobile communication device according to the present invention again uses only one central unit which runs all different applications. However, the integrated circuit of the present mobile communication device does not run software programs but is itself programmed to behave like an application specific integrated circuit which is specialized to run the multimedia application actually selected by the user of the communication device. Since the programmed integrated circuit works much faster than a software application, the performance of the communication device when running one of the multimedia applications is considerably increased.

With the single central unit driving the input and output means, the present invention makes use of the latest developments in programmable chips. The function of these chips will be explained now.

As in mathematics normally all operations can be broken down to the four basic operations "+", "-", "x" and "/", also in digital technique operations can be broken down to two basic operations. Several integrated circuits are known - for example the so-called Field Programmable Gate Arrays (FPGAs) or the Electrically Programmable Logic Devices (EPLDs) - which use this observation to provide integrated circuits with an optimum of flexibility. These chips contain either only the digital basic operations or operations at a higher level like adder, multiplier and so on. An electronic circuit which realizes one of these operations is called a cell. The above-mentioned integrated circuits allow the user to freely connect the cells so that a desired functionality for the integrated circuit can be obtained. These happens by programming the chip which is actually achieved by building or deleting appropriate connections between the cells.

So far, these chips have been programmed one-time in a special device, for example in a so-called burner. However, latest developments offer now chips that can be programmed while they are already installed and running in the finished device. In particular, these chips can now be re-programmed although the have already been programmed before.

The idea of the present invention is to use the flexibility offered by these chips in a mobile communication device, in particular in a portable telephone in order to run different multimedia applications. Depending on the multimedia feature which is selected by the user of the portable telephone, the programming means program the integrated circuit in an appropriate way. After the programming is finished, the circuit behaves like an integrated circuit which is specialized for running the selected application. Obviously, this application specific integrated circuit works much faster than a central processing unit which runs software applications. The performance of the communication device is therefore considerably increased. Nevertheless, the integrated circuit can work as flexible as the central processing unit since it can be re-programmed every time a new multimedia application is selected. Further, the amount of circuitry necessary to realize the communication device of the present invention is comparable to circuitry needed for the CPU-software solution. Thus, the size of the complete communication device can be reduced compared to the first solution with a plurality of specialized integrated circuits.

In a preferred embodiment of the invention the programming means program the integrated circuit in order to control a digital camera contained in the communication device. In particular, the integrated circuit can be programmed for compressing the digital data received from the camera according to a compression standard, for example according to the JPEG compression standard or according to the recently developed JPEG2000 compression standard. Of course, the integrated circuit could be programmed to use other compression formats (e.g. MPEG...) as well.

If the mobile communication device comprises a display, the programming means could be programmed to display video data received either by the wireless communication link or by the digital camera. In this case, the integrated circuit again decompresses or expands the data. Further, the integrated circuit could be programmed to run MP3-files or files in other music formats. In another application, the integrated circuit is programmed to work as an encryption and/or decryption chip.

The data used to program the integrated circuit can be stored in a memory also contained in the mobile communication device. Alternatively, it would be possible to transfer the required programming data via an external connection from a programming device to the mobile communication device. Further, the circuit could be programmed with data received via the wireless communication link.

The programming information used to program the integrated circuit is preferably JAVA information. However, other programming languages like C(++) and C# could be used as well. Alternatively, the programming information could be directly written in VHDL (Very High Speed Integrated Circuit Hardware Description Language). The result of the VHDL compilation could be offered for download in the Internet so that the mobile communication device could be always updated with latest developments for the multimedia applications.

Further advantages, features and details of the present invention will become apparent from the following description of preferred embodiments with reference to the drawings.
- Fig. 1: is a schematic view of a wireless communication device in accordance with the present invention.
- Fig. 2: shows the electrical components contained in the communication device of fig. 1.
- Fig. 3: shows the electrical components contained in an alternative embodiment of a communication device of the present invention.

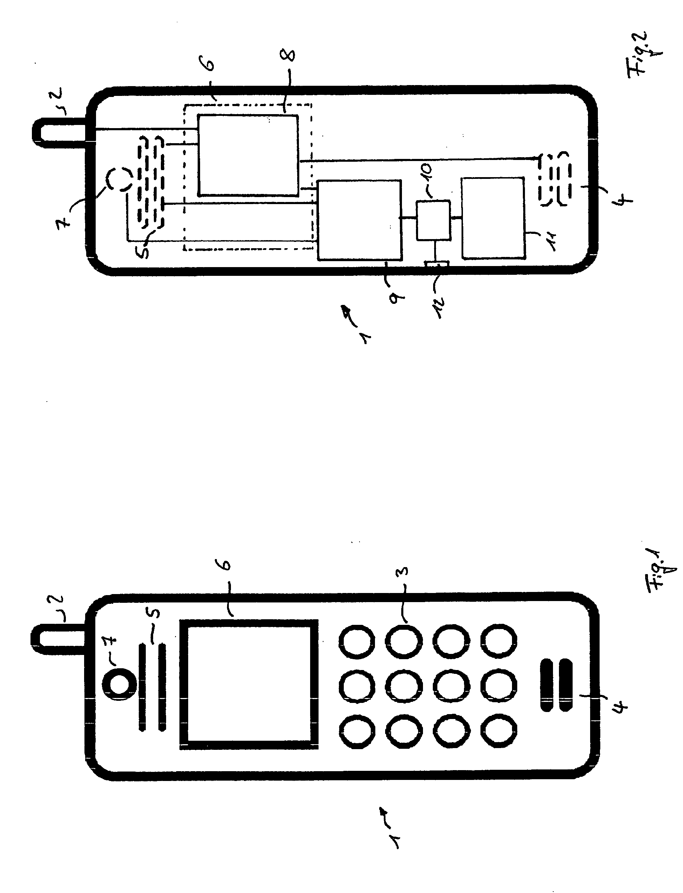

The wireless communication device shown in fig. 1 is a mobile terminal or a portable telephone 1 for use with a wireless cellular communication system, e.g. for the GSM or UMTS system. Only components which are relevant in respect to the present invention are described in the following.

The portable telephone 1 comprises first an antenna 2 for transmitting and receiving wireless communication signals. Further, an alphanumeric keypad 3, a microphone 4 close to the bottom and a loudspeaker 5 close to the top of the casing is contained in the telephone 1.

A display 6 is arranged in the upper part of the telephone 1 which is preferably a color display since it is also used to display color pictures or movies. This display 6 represents first output means for the multimedia applications contained in the portable phone 1. For other multimedia features, the loudspeaker 5 can be used to play music stored in files of a certain music format, in particular music stored as MP3-files. Further, the portable telephone 1 is provided with a digital camera which comprises a lens system 7 arranged just on the top of the loudspeaker 5. The digital camera can be used to take pictures or - in combination with the microphone 4 - to record movies. Alternatively to the embodiment shown in fig. 1, the digital camera could also be located in a separate casing which is connectable with the casing of the telephone.

The pictures or movies taken by the digital camera 7 can be displayed on the display 6 of the portable telephone 1. Further, the data of pictures or movies to be shown on the display 6 could be also received via the wireless communication link established by the antenna 2. For these applications, a high speed communication link like an UMTS communication link is preferably established by the communication means of the mobile phone 1.

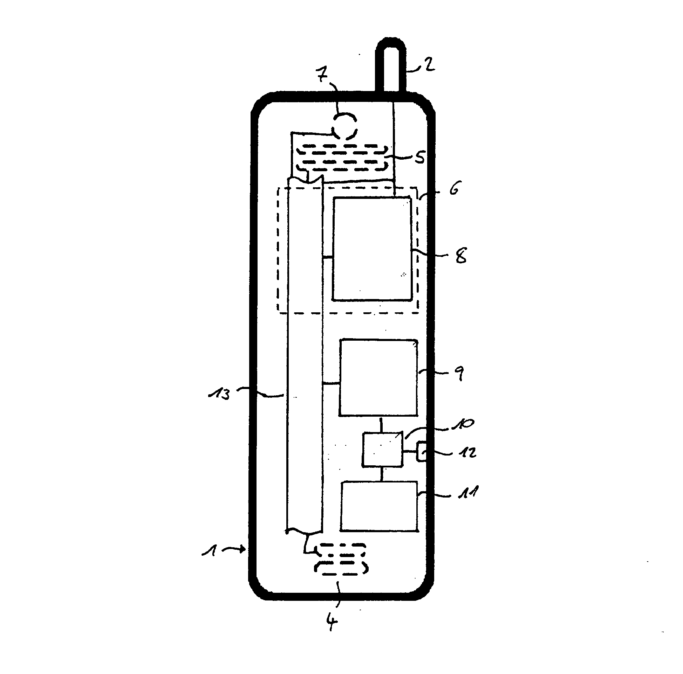

Fig. 2 shows schematically the circuitry contained in the casing of the portable telephone 1. At first, communication means 8 are shown which are responsible for the wireless data communication. These communication means 8 are therefore connected to the antenna 2 in order to establish the communication link. Further, audio data are received from the microphone 4 and further transmitted to the antenna 2 or received from the antenna 2 and transferred to the loudspeaker 5 during a telephone conversation.

The multimedia applications of the portable telephone 1 mentioned above are controlled by an integrated circuit 9. It is important to notice that this single integrated circuit 9 is able to run all the different multimedia applications of the phone 1. Accordingly, it is not necessary to provide a plurality of different integrated circuits which are specialized to run one single application.

In the embodiment shown in fig. 2, the integrated circuit 9 is directly connected to each of the input / output means used in the different multimedia applications. Alternatively, in the second embodiment shown in fig. 3, the integrated circuit 9 is mainly connected to the baseband 13 of the portable telephone 1 in order to support the basebands 13 processors and microcontrollers. In this alternative embodiment, the input / output means are still mainly handled by the baseband 13 which is supported or completed by the integrated circuit 9 in order to run the selected multimedia application(s).

An important feature of the integrated circuit 9 is its programmability. In particular, the integrated circuit 9 can be programmed in order to run the multimedia application which has been previously selected by the user of the portable telephone 1. The programming is done by programming means 10 which are connected with the integrated circuit 9. Although fig. 2 and 3 show only one line connecting the programming means 10 with the integrated circuit 9, it is to be understood that the integrated circuit 9 comprises a plurality of input lines which all lead to the programming means 10. These input lines are necessary to rearrange the logical connections between the cells of the circuit 9 in order to obtain finally an application specific circuit which is specialized to run the selected application.

The programming means 10 are connected to an internal memory 11 which contains the information necessary for programming the integrated circuit 9 in accordance with the selected multimedia application. Alternatively, the circuit 9 can be programmed with external data. The telephone 1 therefore comprises an connector 12 used for connecting the telephone 1 with an external storing medium. This connector 12 could be also used to connect the telephone 1 to the Internet. Further, the circuit 9 could be programmed with data received via the wireless communication link established by the communication means 8 and the antenna 2.

In the following, a typical scenario how the telephone according to the present invention can be used is described.

For example, at a certain time the telephone 1 works as a music player. The integrated circuit 9 has been programmed correspondingly and drives the loudspeaker 5 in a accordance with MP3-data or data in accordance with another music format received via the wireless communication link of the phone 1 or with data stored in the memory 11.

If the user of the portable telephone 1 now decides that he wants to take a picture with the digital camera 7, the programming means 10 first program the integrated circuit 9 (i.e., rearrange the logical connections between the cells of the circuit) in a way that the is able to run the digital camera 7 (in the embodiment of fig. 3 the circuit 9 runs the camera 7 via the baseband 13). After the programming is finished, the user can take pictures with the camera 7. Further, the integrated circuit 9 could now be used to take movies via the camera 7 and the microphone 4. Following this, the integrated circuit 9 is programmed in order to show a movie on the display 6 of the telephone 1. Afterwards, the circuit 9 could be again re-programmed to work as an encryption / decryption chip for providing a safe data communication.

As can be seen from the above example, the single integrated circuit 9 acts like several hardwares. It is programmed by the programming means 10 according the next task it has to perform. This programming can even be done during run time of the telephone 1, i. e. during a call. In particular, there is no need to take the circuit 9 out of the telephone 1 in a special programming device like a burner. After the circuit 9 has been configured for next task it immediately acts like an integrated circuit specialized for the desired application.

The main advantage of the present invention is that the integrated circuit 9 works very fast to run the different multimedia applications but can also be programmed very flexible in order to fulfill new functions. For the manufactures of portable communication devices it is also important that only one circuit has to be developed which is able to manage a wide range of applications. Further, the circuit can be re-programmed in order to manage new applications recently developed by the manufacturer or other multimedia providers.

For example, at the moment video and picture data are compressed according to the widely used JPEG compression standard or according to other compression formats like MPEG... However, just recently the new standard JPEG2000 has been developed which uses wavelet transformations. This new standard provides improved compression factors. Via a simple download of programming information to the storing means 11 the integrated circuit 9 could be programmed to run the new JEPG2000 compression standard. Since the circuit 9 is after the re-programming specialized for this new application, it is able to manage the difficult and time consuming calculations of the new compression algorithm.

The information used to program the integrated circuit 9 could be based on C(++) or C#, preferably on JAVA. In particular the programming means 10 could contain a JAVA translator which translates the JAVA information into the signals required to program the integrated circuit 9. Thus, the different multimedia application can - as already widely realized - be provided as JAVA applets with are used to build an application specific integrated circuit. Alternatively, the applications could be directly written in VHDL (Very High Speed Integrated Circuit Hardware Description Language).

After being programmed according to the desired task, the integrated circuit works extremely fast when running the selected multimedia application. In particular, these applications can be run at a very high speed compared to the software solution mentioned at the beginning. However, only one single circuit is necessary to run the different multimedia applications. Thus, the size and the costs for manufacturing the portable communication device are considerably reduced.

## Claims

1. Mobile communication device (1) comprising
communication means (2, 6) for establishing a wireless communication link and input and output means (4, 5, 6, 7) for recording, processing, playing and/or showing audio or video information,
wherein the communication device (1) comprises further at least one re-programmable integrated circuit (9) as well as programming means (10) for programming the integrated circuit (9) in order to drive one or a plurality of the input and output means (4, 5, 6, 7),
**characterized in**
**that** communication device is adapted to offer a plurality of multimedia applications
**that** can be selected by a user of the communication device,
wherein the programming means (10) are adapted to program the integrated circuit in order to run the application which has been previously selected.

2. Mobile communication device according to claim 1,
wherein the programming means (10) are adapted to program the integrated circuit (9) in order to control a digital camera (7) of the communication device (1).

3. Mobile communication device according to claim 2,
wherein the digital camera (7) is integrated in the communication device (1).

4. Mobile communication device according to claim 2,
wherein the digital camera (7) is located in a separate casing which is connectable with the casing of the communication device (1).

5. Mobile communication device according to one of the claims 2 to 4,
wherein the programming means (10) are adapted to program the integrated circuit (9) in order to compress and/or decompress the digital data received from the digital camera (7) according to a compression standard.

6. Mobile communication device according to claim 5,
wherein the digital data are compressed according to the JPEG compression standard.

7. Mobile communication device according to claim 5,
wherein the digital data are compressed according to the JPEG2000 compression standard.

8. Mobile communication device according to one of the claims 1 or 7,
wherein the programming means (10) are adapted to program the integrated circuit (9) in order to display video data received either via the wireless communication link or by the digital camera (7) on display means (6) of the communication device (1)

9. Mobile communication device according to one of the claims 1 to 8,
wherein the programming means (10) are adapted to program the integrated circuit (9) in order to drive audio output means (5) in accordance with data of a music file.

10. Mobile communication device according to claim 9,
wherein the music file is a MP3-file.

11. Mobile communication device according to one of the preceding claims,
wherein the programming means (10) are adapted to program the integrated circuit (9) in order to work as an encryption / decryption chip.

12. Mobile communication device according to one of the preceding claims,
wherein the programming means (10) are adapted to program the integrated circuit (9) in accordance with data stored in a memory (11) contained in the mobile communication device (1).

13. Mobile communication device according to one of the preceding claims,
wherein the programming means (10) are adapted to program the integrated circuit (9) in accordance with data received via an external connection (12) of the mobile communication device (1).

14. Mobile communication device according to one of the preceding claims,
wherein the programming means (10) are adapted to program the integrated circuit (9) in accordance with data received via a wireless communication link established by the mobile communication device (1).

15. Mobile communication device according to one of the preceding claims,
wherein the data used by the programming means (10) to program the integrated circuit (9) are JAVA information.

16. Mobile communication device according to one of the preceding claims.
wherein the integrated circuit (9) is directly connected to the input and output means (4, 5, 6, 7).

17. Mobile communication device according to one of the claims 1 to 15,
wherein the integrated circuit (9) is connected to the input and output means (4, 5, 6, 7) via the baseband (13) of the communication device (1).

18. Mobile communication device according to one of the preceding claims.
wherein the mobile communication device is a portable telephone (1).

19. Mobile communication device according to one of the preceding claims.
wherein the integrated circuit (9) contains field programmable gate arrays and the integrated circuit (9) is programmed by a rearrangement of the connections between the cells of the circuit (9).

## Patentansprüche

1. Mobiles Kommunikationsgerät (1), welches aufweist:
Kommunikationsmittel (2, 6) zum Herstellen einer drahtlosen Kommunikationsverbindung sowie Eingabe- und Ausgabemittel (4, 5, 6, 7) zum Aufzeichnen, Verarbeiten, Abspielen und/oder Darstellen von Audio- oder Videoinformationen,
wobei das Kommunikationsgerät (1) weiterhin mindestens einen umprogrammierbaren integrierten Schaltkreis (9) sowie Programmiermittel (10) zur Programmierung des integrierten Schaltkreises (9) enthält, um eines oder mehrere der Eingabe- und Ausgabemittel (4, 5, 6, 7) anzusteuern,
**gekennzeichnet dadurch, dass**
das Kommunikationsgerät mehrere Multimedia-Anwendungen zur Auswahl durch einen Nutzer anbieten kann,
wobei der integrierte Schaltkreis mittels der Programmiermittel (10) so programmiert werden kann, dass die zuvor ausgewählte Anwendung ausgeführt wird.

2. Mobiles Kommunikationsgerät nach Anspruch 1,
wobei der integrierte Schaltkreis (9) mittels der Programmiermittel (10) programmiert werden kann, um eine Digitalkamera (7) des Kommunikationsgerät (1) anzusteuern.

3. Mobiles Kommunikationsgerät nach Anspruch 2,
wobei die Digitalkamera (7) in das Kommunikationsgerät (1) integriert ist.

4. Mobiles Kommunikationsgerät nach Anspruch 2,
wobei die Digitalkamera (7) in einem separaten Gehäuse angeordnet ist, das mit dem Gehäuse des Kommunikationsgeräts (1) verbunden werden kann.

5. Mobiles Kommunikationsgerät nach einem der Ansprüche 2 bis 4,
wobei der integrierte Schaltkreis (9) mittels der Programmiermittel (10) so programmiert werden kann, dass die von der Digitalkamera (7) empfangenen digitalen Daten gemäß einem Kompressionsstandard komprimiert und/oder dekodiert werden.

6. Mobiles Kommunikationsgerät nach Anspruch 5,
wobei die digitalen Daten gemäß dem JPEG-Kompressionsstandard komprimiert werden.

7. Mobiles Kommunikationsgerät nach Anspruch 5,
wobei die digitalen Daten gemäß dem JPEG2000-Kompressionsstandard komprimiert werden.

8. Mobiles Kommunikationsgerät nach einem der Ansprüche 1 oder 7,
wobei der integrierte Schaltkreis (9) mittels der Programmiermittel (10) so programmiert werden kann, dass die entweder über die drahtlose Kommunikationsverbindung oder von der Digitalkamera (7) empfangenen Videodaten auf Anzeigemitteln (6) des Kommunikationsgeräts (1) dargestellt werden.

9. Mobiles Kommunikationsgerät nach einem der Ansprüche 1 bis 8,
wobei der integrierte Schaltkreis (9) mittels der Programmiermittel (10) so programmiert werden kann, dass Audioausgabemittel (5) anhand von Daten einer Musikdatei angesteuert werden.

10. Mobiles Kommunikationsgerät nach Anspruch 9,
wobei die Musikdatei eine MP3-Datei ist.

11. Mobiles Kommunikationsgerät nach einem der vorstehenden Ansprüche,
wobei der integrierte Schaltkreis (9) mittels der Programmiermittel (10) so programmiert werden kann, dass er als Verschlüsselungs-/Entschlüsselungs-Chip arbeitet.

12. Mobiles Kommunikationsgerät nach einem der vorstehenden Ansprüche,
wobei der integrierte Schaltkreis (9) mittels der Programmiermittel (10) anhand von Daten programmiert werden kann, die in einem im mobilen Kommunikationsgerät (1) enthaltenen Speicher (11) gespeichert sind.

13. Mobiles Kommunikationsgerät nach einem der vorstehenden Ansprüche,
wobei der integrierte Schaltkreis (9) mittels der Programmiermittel (10) anhand von Daten programmiert werden kann, die über eine externe Verbindung (12) des mobilen Kommunikationsgeräts (1) empfangen werden.

14. Mobiles Kommunikationsgerät nach einem der vorstehenden Ansprüche,
wobei der integrierte Schaltkreis (9) mittels der Programmiermittel (10) anhand von Daten programmiert werden kann, die über eine mit dem mobilen Kommunikationsgerät (1) hergestellte drahtlose Kommunikationsverbindung empfangen werden.

15. Mobiles Kommunikationsgerät nach einem der vorstehenden Ansprüche,
wobei die von den Programmiermitteln (10) zur Programmierung des integrierten Schaltkreises (9) verwendeten Daten JAVA-Informationen sind.

16. Mobiles Kommunikationsgerät nach einem der vorstehenden Ansprüche,
wobei der integrierte Schaltkreis (9) direkt mit den Eingabe- und Ausgabemitteln (4, 5, 6, 7) verbunden ist.

17. Mobiles Kommunikationsgerät nach einem der Ansprüche 1 bis 15,
wobei der integrierte Schaltkreis (9) über das Basisband (13) des Kommunikationsgeräts (1) mit den Eingabe- und Ausgabemitteln (4, 5, 6, 7) verbunden ist.

18. Mobiles Kommunikationsgerät nach einem der vorstehenden Ansprüche,
wobei das mobile Kommunikationsgerät ein tragbares Telefon (1) ist.

19. Mobiles Kommunikationsgerät nach einem der vorstehenden Ansprüche,
wobei der integrierte Schaltkreis (9) vor Ort programmierbare Logikbausteine enthält und durch Umordnung der Verbindungen zwischen seinen Zellen programmiert wird.

## Revendications

1. Dispositif de communication mobile (1) comprenant
des moyens de communication (2, 6) pour établir une liaison de communication sans fil et des moyens d'entrée et de sortie (4, 5, 6, 7) pour enregistrer, traiter, reproduire et/ou montrer de l'information audio ou vidéo,
dans lequel le dispositif de communication (1) comprend en outre au moins un circuit intégré reprogrammable (9) ainsi que des moyens de programmation (10) pour programmer le circuit intégré (9) afin de faire fonctionner un ou une multiplicité des moyens d'entrée et de sortie (4, 5, 6, 7),
**caractérisé en ce que**
le dispositif de communication est adapté pour offrir une multiplicité d'applications multimédia qui peuvent être sélectionnées par un utilisateur du dispositif de communication,
dans lequel les moyens de programmation (10) sont adaptés pour programmer le circuit intégré de manière à exécuter l'application qui a été sélectionnée précédemment.

2. Dispositif de communication mobile selon la revendication 1,
dans lequel les moyens de programmation (10) sont adaptés pour programmer le circuit intégré (9) de façon à commander un appareil de prise de vue numérique (7) du dispositif de communication (1).

3. Dispositif de communication mobile selon la revendication 2,
dans lequel l'appareil de prise de vue numérique (7) est intégré dans le dispositif de communication (1).

4. Dispositif de communication mobile selon la revendication 2,
dans lequel l'appareil de prise de vue numérique (7) est placé dans un boîtier séparé qui peut être couplé au boîtier du dispositif de communication (1).

5. Dispositif de communication mobile selon l'une des revendications 2 à 4,
dans lequel les moyens de programmation (10) sont adaptés pour programmer le circuit intégré (9) de façon à compresser et/ou décompresser les données numériques reçues de l'appareil de prise de vue numérique (7), conformément à un standard de compression.

6. Dispositif de communication mobile selon la revendication 5,
dans lequel les données numériques sont compressées conformément au standard de compression JPEG.

7. Dispositif de communication mobile selon la revendication 5,
dans lequel les données numériques sont compressées conformément au standard de compression JPEG2000.

8. Dispositif de communication mobile selon l'une des revendications 1 ou 7,
dans lequel les moyens de programmation (10) sont adaptés pour programmer le circuit intégré (9) de façon à visualiser, sur les moyens de visualisation (6) du dispositif de communication (1), des données vidéo reçues soit par l'intermédiaire de la liaison de communication sans fil, soit par l'appareil de prise de vue numérique (7).

9. Dispositif de communication mobile selon l'une des revendications 1 ou 8,
dans lequel les moyens de programmation (10) sont adaptés pour programmer le circuit intégré (9) de façon à faire fonctionner des moyens de sortie audio (5) conformément à des données d'un fichier de musique.

10. Dispositif de communication mobile selon la revendication 9,
dans lequel le fichier de musique est un fichier MP3.

11. Dispositif de communication mobile selon l'une des revendications précédentes,
dans lequel les moyens de programmation (10) sont adaptés pour programmer le circuit intégré (9) de manière qu'il fonctionne comme une puce de chiffrement / déchiffrement.

12. Dispositif de communication mobile selon l'une des revendications précédentes,
dans lequel les moyens de programmation (10) sont adaptés pour programmer le circuit intégré (9) conformément à des données stockées dans une mémoire (11) contenue dans le dispositif de communication mobile (1).

13. Dispositif de communication mobile selon l'une des revendications précédentes,
dans lequel les moyens de programmation (10) sont adaptés pour programmer le circuit intégré (9) conformément à des données reçues par l'intermédiaire d'une connexion externe (12) du dispositif de communication mobile (1).

14. Dispositif de communication mobile selon l'une des revendications précédentes,
dans lequel les moyens de programmation (10) sont adaptés pour programmer le circuit intégré (9) conformément à des données reçues par l'intermédiaire d'une liaison de communication sans fil établie par le dispositif de communication mobile (1).

15. Dispositif de communication mobile selon l'une des revendications précédentes,
dans lequel les données utilisées par les moyens de programmation (10) pour programmer le circuit intégré (9) sont de l'information JAVA.

16. Dispositif de communication mobile selon l'une des revendications précédentes,
dans lequel le circuit intégré (9) est directement connecté aux moyens d'entrée et de sortie (4, 5, 6, 7).

17. Dispositif de communication mobile selon l'une des revendications 1 à 15,
dans lequel le circuit intégré (9) est connecté aux moyens d'entrée et de sortie (4, 5, 6, 7) par l'intermédiaire de la bande de base (13) du dispositif de communication (1).

18. Dispositif de communication mobile selon l'une des revendications précédentes,
dans lequel le dispositif de communication mobile est un téléphone portable (1).

19. Dispositif de communication mobile selon l'une des revendications précédentes,
dans lequel le circuit intégré (9) contient des réseaux de portes programmables par l'utilisateur et le circuit intégré (9) est programmé par un réarrangement des connexions entre les cellules du circuit (9).
